# EUROPEAN PATENT SPECIFICATION

(11) **EP 0 489 064 B1**
(45) Date of publication and mention of the grant of the patent: **14.06.1995**
(21) Application number: 90912630.2
(22) Date of filing: 17.08.1990
(51) Int. Cl.: H02J 13/00, H05B 37/02, G05F 1/30

(54) **ELECTRICAL POWER DISTRIBUTION CONTROL SYSTEM**
STEUERUNGSSYSTEM FÜR DIE VERTEILUNG ELEKTRISCHER ENERGIE
SYSTEME DE COMMANDE DE DISTRIBUTION D'ELECTRICITE

(30) Priority: 21.08.1989 GB 8918981
(43) Date of publication of application: 10.06.1992
(73) Proprietor: ECONOLIGHT LIMITED, London W1 (GB)
(72) Inventor: LAWRENCE, John, Arthur Laburnham House, East Sussex TN22 3LX (GB); FINCH, David, Allen Redroof Cottage, East Sussex TN22 3HY (GB)
(74) Representative: Read, Matthew Charles
(86) International application number: GB9001303
(87) International publication number: WO9103093

(56) References cited:
- EP-A- 0 378 473
- WO-A-88/03353
- AT-B- 380 619
- CH-A- 200 156
- DE-C- 759 192
- US-A- 2 125 765
- US-A- 3 621 374
- US-A- 3 721 830

## Description

This invention relates to an electrical power distribution control system which permits remote control of electrical loads such as electric lamps connected to a power distribution conductor system.

The invention has particular but not exclusive application to the remote control of loads in buildings such as offices or domestic premises.

Remote control systems for electrical lighting have been previously proposed in which a central control unit applies bursts of an A.M. carrier to supply conductors of a domestic ac supply. Remote switching units connected to the supply conductors respond to the bursts of carrier to switch selectively electrical load circuits e.g. electric lamps. The bursts of A.M. carrier may be of different lengths or different frequencies so that the load circuits can be switched individually by the remote switching units.

A disadvantage of these proposals is that they are expensive to manufacture and also requires special inductances connected in the main supply to prevent signals produced in one dwelling from feeding back along the main supply to another dwelling.

It is an object of the present invention to provide a much simpler remote switching system.

The invention provides a development to a system described in WO-A-8803353 which discloses a gas discharge lighting system comprising a gas discharge lamp, a power distribution conductor system for transmitting electrical power to the lamp, and an electrical power supply for feeding electrical power to the conductor system at a predetermined nominal supply voltage below normal mains voltage and including a transformer for temporarily inducing a supplementary voltage when initially operating the lamp to effect igniting thereof.

An embodiment described in WO-A-8803353 is a control system for electrical lighting e.g. flourescent lamps, wherein the supply voltage is reduced from normal mains voltage after start up of the lamps. A first transformer provides a reduced voltage (216 v) as compared with mains supply voltage (240 v). A second transformer provides a supplementary voltage (24 v). Upon start up of the circuit, a control circuit connects both the reduced voltage from the first transformer and the supplementary voltage from the second transformer to the output so as to provide a voltage which is sufficient to strike the flourescent lamps. The control circuit after a predetermined delay e.g. 15 seconds, disconnects the supplementary voltage. The lamps then continue to operate on the reduced voltage (216 v) thereby reducing the power consumed by the lamps. Preferably, the reduced voltage for signalling operation of the switching means is produced by means of the second transformer. The transformer is connected in such a manner as to produce an impedance which reduces the nominal supply voltage produced by the first transformer i.e. reduces the output below 216 volts to e.g. 204 volts.

According to the present invention, there is provided a gas-discharge lighting system, as defined above with reference WO-A-8803353, characterized by signalling means employing the transformer to produce signalling voltage excursions on the conductor system, and remote switching means coupled to said power distribution conductor system, wherein the switching means is responsive to the signalling voltage excursions to control the supply of electrical power from the conductor system.

Preferred features of the present invention are set out in the dependent claims appended hereto.

In order that the invention may be more fully understood, embodiments thereof will now be described by way of example with reference to the accompanying drawings, in which:
Figure 1 is a schematic circuit diagram in block form of an electrical power distribution control system in accordance with the invention;
Figure 2 is a schematic circuit diagram of a signalling circuit according to a first aspect of the invention;
Figure 3 is a schematic circuit diagram of a switch and control circuit shown in Figure 1;
Figure 4 is a schematic circuit diagram in partial block form of a signalling circuit according to the invention; and
Figure 5 is a schematic circuit diagram of part of the supply voltage monitoring circuit.

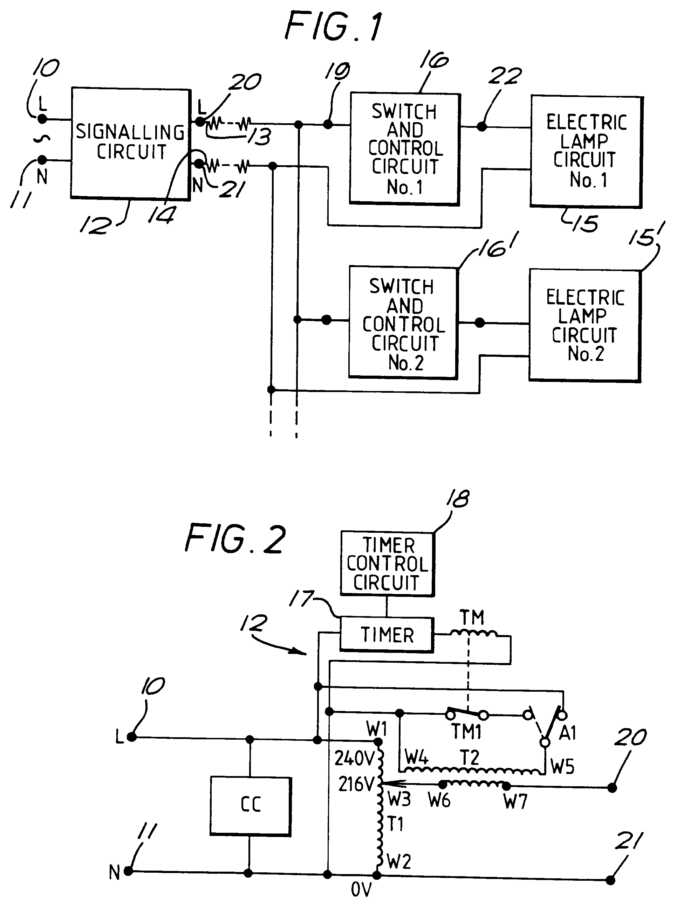

Referring firstly to Figure 1, domestic ac supply is connected to live and neutral input terminals 10, 11 of a signalling circuit 12 having live and neutral output terminals 20, 21 that are connected to supply conductors 13, 14 of a conventional ac power supply distribution system, as found conventionally in offices dwellings etc. A first electric lamp circuit 15 is connected to the supply conductors 13, 14 under the control of an electric switch and control circuit 16. The lamp circuit may comprise a number of flourescent tubes and the switch and control circuit 16 comprises a switch operable manually in the vicinity of the lamp circuit 15 together with a control circuit responsive to signals from the signalling circuit 12 to permit remote switching of the lamp circuit 15. The circuit 16 is connected in the live line 13 and may be embodied as a replacement unit for a conventional wall switch for an ac supply. A second electric lamp circuit 15′ and a corresponding second switch and control circuit 16′ are connected to the main supply conductors 13, 14.

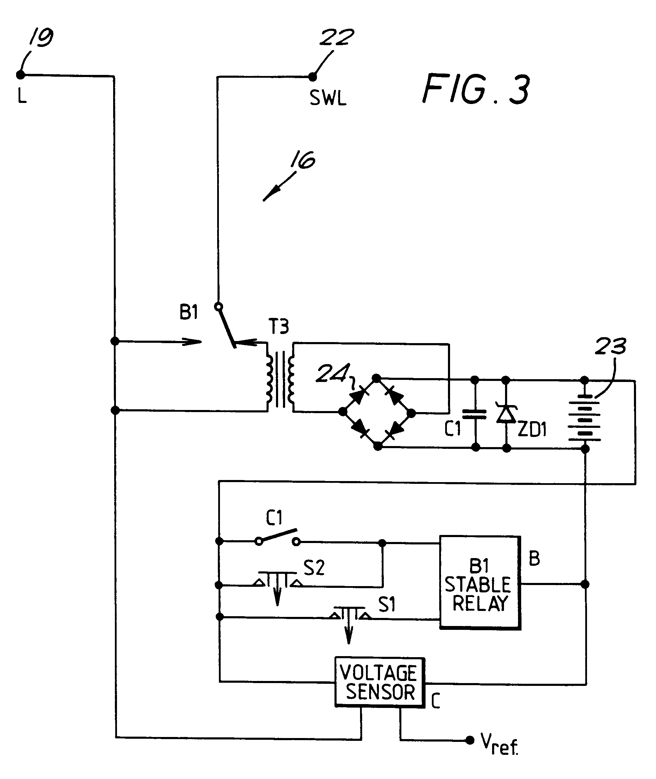

As will be explained in more detail hereinafter with reference to Figures 2 and 3, the signalling circuit 12 produces remote switching of the lamp circuits by temporarily reducing the supply voltage on conductors 13, 14. The switch and control circuit 16, 16′ are individually responsive to different durations of reduction of the supply voltage. Thus, the circuit 16 may be responsive to a reduction for a period of five seconds whereas the circuit 16′ may be responsive to a voltage reduction for 10 seconds. Thus, if the signalling circuit 12 produces a temporary reduction in the supply voltage for five seconds, circuit 16 operates to switch the lamp circuit 15 whereas if the signalling circuit 12 produces a voltage reduction for 10 seconds the switch and control circuit 16′ operates to switch lamp circuit 15′. It will be appreciated that further switch and control circuits 16 could be provided responsive to yet further different temporary voltage reduction periods. The reduced voltage that occurs during signalling is selected so that any lamps which are lit remain operational.

Conveniently, the signalling circuit may be based on the control circuit described in our aforementioned PCT Patent Application. Accordingly, the live and neutral terminals 10, 11 are configured to receive a supply voltage of 240 volts and the output terminals 20, 21 are arranged to deliver a nominal supply voltage of 216 volts during normal operation of the lamps. However, at start up the nominal supply voltage is boosted to 240 volts to enable the flourescent lamps to strike. During signalling, the nominal supply voltage of 216 volts is temporarily reduced to 204 volts for either five or 10 seconds in order to operate the switch and control circuits 16, 16′ selectively.

The signalling circuit 12 will now be described in more detail with reference to Figure 2 which can be considered to be a modification of Figure 1 of the PCT Application. The first transformer Ti in the form of an auto-transformer has winding tapping W1, W2 connected across the main supply voltage terminals 10, 11. The transformer T1 also has an output tapping W3 which provides the nominal supply voltage of 216 volts that is supplied to output terminals 20, 21.

The second, step-down transformer T2 has primary winding tappings W4, W5 connectible to the main supply terminals 10, 11 through a changeover switch contact A1. Transformer T2 has secondary winding tappings W6, W7 connected in series with output terminals 20 and the tapping W3 of the first transformer T1. A control circuit CC shown schematically in Figure 2, controls operation of the changeover contact A1. In a first position of Ai shown in solid outline in Figure 2, the transformer T2 is connected to provide a voltage in its secondary which increments a reduced voltage of 216 volts produced by the transformer Ti so as to provide an output voltage at the terminals 20, 21 which closely approximates full mains voltage (i.e. 240 volts). When the control circuit operates changeover switch Ai to the position shown in dotted outline in Figure 2, the terminals W4, W5 of the primary of T2 are effectively short circuited such that T2 no longer produces the supplementary voltage and also does not impede current flow from Ti to the output terminals 20, 21.

The control circuit CC is so arranged that upon start of the lamps, switch A1 is in the position shown in solid outline in Figure 2 so that a voltage approximating to mains voltage is produced at the terminals 20, 21 to enable switch on of the lamps. A short period thereafter e.g. 15 seconds, the control circuit CC switches A1 to the dotted line position so as to disable operation of transformer T2 and thereby reduce the voltage supplied to the lamps by 24 volts i.e. approximately 10% of normal mains voltage. This circuit operation is described in more detail in our aforementioned PCT Application. Also, a more detailed description of two embodiments of the control circuit CC are described in the PCT Application and the contents thereof are incorporated herein by reference. It has been found that by operating the lamps at the reduced voltage of 216 volts, no substantial loss in light output occurs but a substantial saving in power is achieved.

The remote switching according to the invention is achieved by means of a timer 17 which switches current from the mains supply through the coil of a relay TM having switching contacts TMi so arranged to switch the primary winding of the second transformer T2 between an open and a closed circuit condition. The timer 17 is controlled by signalling means 18 which includes a manually operable switch (not shown).

In use, the signalling means 18 can be used to set the timer for a period appropriate for switching lamp circuit 15 or 15′ i.e. 5 or 10 seconds. Thus, after start up of the lights, the contactor CC operates contact AI to the position shown in dotted outline so as to apply the nominal supply voltage of 216 v to the output terminals 20, 21 and hence to the supply conductors 13, 14. When the contact TM1 is in the position shown in Figure 2, the terminals W4, W5 of the primary of transformer T2 are short circuited which results in the transformer T2 presenting a low impedance such that a negligable voltage drop occurs between the secondary winding tappings W6, W7. As a result, the voltage produced at winding tapping W3 is substantially the same as that produced across terminals 20, 21. When it is desired to produce remote switching of lamp circuit 15 or 15′, the timer control circuit is operated to operate timer 17 for a period of either 5 or 10 seconds. This produces energisation of relay coil TM for a commenserate period which opens relay contacts TMi so as to produce an open circuit between terminal W4, W5 of the primary of transformer T2. As a result, the impedance presented by the transformer T2 increases such that a voltage drop of approximately 20 volts occurs between the winding terminals W6, W7 of its secondary. Consequently, the voltage developed across terminals 20, 21 drops to approximately 20 volts during the period of operation of timer 17. This voltage drop is used to operate switching circuits 16, 16′ as will now be explained with reference to Figure 3 which shows the circuit 16 in more detail.

The live conductor 13 is connected to live input terminal 19 and the output of the circuit is applied to switched live terminal 22. A rechargeable battery 23 is connected to a power supply unit comprising a full wave rectifier bridge 24 through a step down transformer T3. The output of the rectifier bridge 24 is stabilised by a zener diode ZDi and a capacitor C1.

The rechargeable battery 23 acts as a power supply for the circuit and drives a bistable relay B having contactor Bi arranged to switch power from the live terminal 19 to the switched live terminal 22.

The voltage on the live terminal 19 is detected by means of a voltage sensor circuit which operates a switch C1 for triggering the relay B. The switch C1 is conveniently a transistor switch. In addition, a manually operable push button switch S1 is provided for latching the relay B. A manual push button switch S2 is provided for unlatching the relay B.

On operation of push button S1, the relay B latches on and contact Bi changes over from the position shown in Figure 3 so as to connect the live terminal 19 to the switched live terminal 22. Thereby disconnecting the transformer T3 and energising the lamp circuit 15 (Figure 1). In the event that the signalling circuit 12 (Figure 2) produces a switching signal to circuit 16, the voltage on the live terminal 19 is reduced below 204 volts for a period of five seconds. The voltage sensor C is arranged to detect this condition by comparing the voltage at the live terminal 19 with a reference voltage Vref which is conveniently earth. When the five second voltage reduction is detected, voltage sensor C closes switch C1, which provides a release signal to latching relay B and thereby causes contact BI to change over into the position shown in Figure 3 so as to switch off the lights and reconnect transformer T3 thereby to charge the battery 23. The transformer T3 has a high input impedance so that when the contactor B1 is in the position shown in Figure 3 insufficient current flows through the transformer to illuminate the light circuit 15. It will be appreciated that with this type of circuit, the lights are off more than they are on and accordingly, the transformer T3 and rectifier 24 are connected to the battery 23 for sufficient time to maintain it fully charged, thereby ensuring reliable operation of the switching circuit.

The voltage sensor C is so arranged that in the event of a power failure, and the subsequent restoration of power, the relay B remains in the mode in which it was set immediately before the power failure. To this end, the voltage sensor C is arranged to operate switch C1 in response to an increase in voltage at the end of the signalling period i.e. five second. If the voltage restoration does not occur within this period, the voltage sensor assumes that the reduction in voltage is due to a power failure and is configured to maintain the relay B in the same mode upon restoration of the power at the end of the power failure.

The voltage sensor C is programmable to detect recovery of the voltage from below the reduced voltage e.g. 204 volts after five seconds, 10 second, 15 seconds etc. so that a corresponding circuit 16 can be used for control circuit 16′ in Figure 1. Clearly, further lamp circuits 15 and associated control circuits 16 can be connected to the supply conductors 13, 14 and can be switched selectively by appropriate control of the timer 17 shown in Figure 2 and appropriate settings of the voltage sensor C shown in Figure 3.

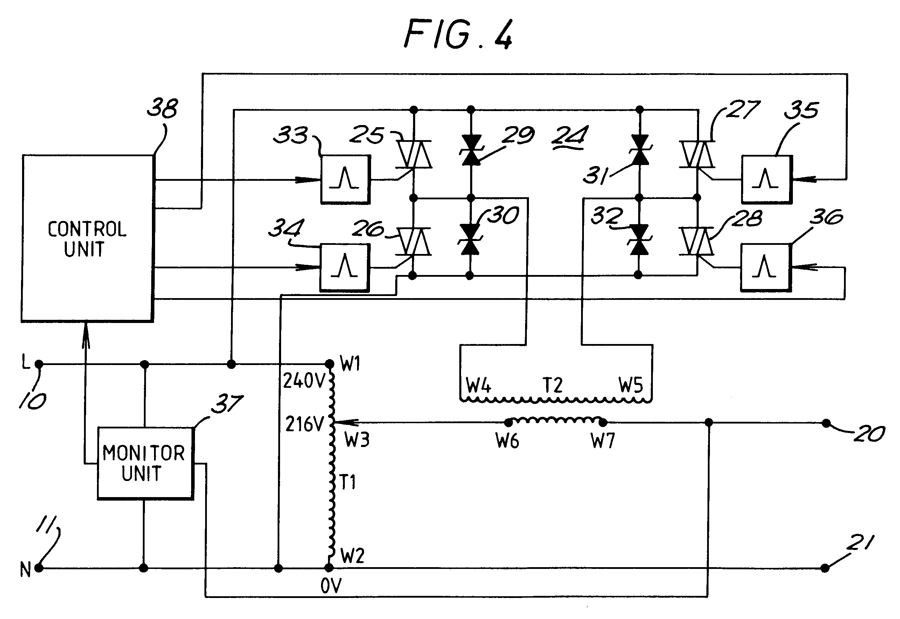

An alternative embodiment of the signalling circuit 12 will now be described in detail with reference to Figure 4. Again the first transformer T1 in the form of an autotransformer has winding tappings W1, W2 connected across the mains supply voltage terminals 10, 11. The transformer Ti also has an output tapping W3 which provides the nominal supply voltage of 216 volts that is supplied to the output terminals 20, 21.

The second, step-down transformer T2 has a secondary winding connected in series with the output tapping W3 of the first transformer. The primary winding tappings W4, W5 of the second transformer T2 are connected to opposite nodes of a bridge circuit 24. The remaining two nodes of the bridge are connected to the mains supply. The arms of the bridge circuit 24 are identical to each other and each comprises a triac 25, 26, 27, 28, connected by its main terminals to consecutive nodes, in parallel with a varistor 29, 30, 31, 32. The triacs 25, 26, 27, 28 are triggered by pulses produced by four pulse forming circuits 33, 34, 35, 36.

A monitor unit 37 monitors the mains input current and voltage, and the output voltage. Signals indicative of the various monitored conditions are passed to a control unit 38. The control unit 38 also receives signalling time signals from a timer. The control unit 38 produces four outputs which are fed to the pulse forming circuits 33, 34, 35, 36 respectively, in order to control the switching of the triacs 25, 26, 27, 28.

In operation, the monitoring unit 37 monitors the input current and voltage, and should the current increase, indicating that an additional light has been switched-on, or the input voltage fall, it sends a BOOST command to the control unit 38.

Since the remote switching is dependant on causing periods of reduced supply voltage, it is confusing for the system if there is an inadvertant but brief drop in the supply voltage between the terminals 20, 21. In order to overcome this, the monitor unit 37 monitors the output voltage between terminals 20, 21 and on detection of an unwanted drop in output voltage sends a BOOST signal to the control unit 38. When the control unit 38 receives a BOOST signal it outputs signals which cause the triac 27 between the tapping W5 of the primary winding of the second transformer T2 and the live line, and the triac 26 between tapping W4 of the primary winding of the second transformer T2 and the neutral line to conduct. This causes a current to flow in the primary winding of the second transformer T2 which is in phase with that flowing in its secondary winding due to the first transformer T1. The current flowing in the primary winding of the second transformer T2 induces a voltage in the secondary winding thereof which is superimposed on the voltage output by the first transformer T1. Since the voltages are in phase the result is an increase in peak voltage between the output terminals 20, 21.

Under normal operating conditions, i.e. in economy mode, it is necessary for the primary winding of the second transformer T2 to be shorted out. This is achieved by the control unit 38 producing signals to trigger the two triacs 26, 28 which are connected to the neutral line. The two triacs 26, 28 then conduct and provide low impedance paths between the tappings W4, W5 of the primary winding of the second transformer T2 and the neutral line. This means that the secondary winding of the second transformer T2 presents a low impedance to the current flowing in the lighting circuit.

When it is desired to produce remote switching of lamp circuits 15 or 15′, the signalling timer 39 is operated to pass a signal having a duration of either 5 or 10 seconds to the control unit 38.

During signalling it is necessary to reduce the voltage between the output terminals 20, 21. When the system is operating in economy mode, this achieved by inducing a voltage in the secondary winding of the second transformer T2 in anti-phase to the voltage output from the first transformer T1. To this end the triac 25 between the tapping W4 of the primary winding of the second transformer T2 and the live line, and the triac 28 between the tapping W5 of the primary winding of then second transformer T2 and the neutral line are triggered by the control unit 38. This causes a current to flow in the primary winding of the second transformer T2 in anti-phase to that flowing in the primary thereof as a result of the first transformer T1.

If, however, the system is operating in boost mode, the voltage drop produced, by inducing a voltage in the secondary winding of the second transformer T2 in anti-phase to the voltage output from the first transformer T1, would be in the order of twice the required value. Therefore, when signalling is carried out during boost mode, the control unit 38 causes the the primary winding of the second transformer T2 to be shorted for the duration of the signalling pulse. The shorting of the primary winding of the secondary transformer T2 is carried out in the same manner as during economy mode.

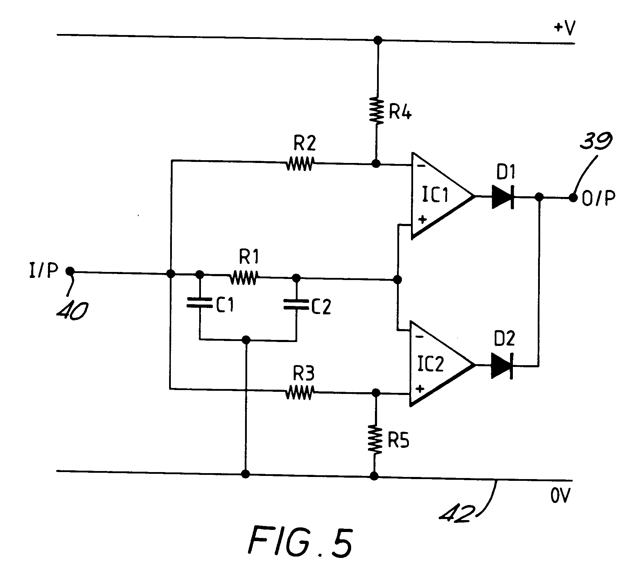

For effective signalling the signalling pulses should be applied to a steady supply voltage. To this end the monitor unit includes a supply voltage steadiness determining circuit, part of which is shown in Figure 5. Referring to Figure 5, the circuit comprises a pair of voltage comparators IC1,IC2, a pair of diodes Di,D2 having their anodes connected to the outputs of respective comparators IC1,IC2 and their cathodes connected together, first and second potential dividers formed by resistors R2 and R4, and R3 and R5 respectively, and a low pass filter R1,C1,C2. The cathodes of the diodes Di,D2 are also connected to the output connection 39 of the circuit. The low pass filter R1,C1,C2 is in the form of a pi-network, the input of which is connected to the circuit input connection 40. The output of the low pass filter R1,C1, C2 is coupled to the non-inverting input of IC1 and to the inverting input of IC2. The first potential divider R2,R4 is connected between the circuit input 40 and the positive supply rail 41 with its mid-point coupled to the inverting input of IC1. The second potential divider R3,R5 is connected between the circuit input 40 and the OV rail 42 with its mid-point coupled to the non-inverting input of IC2.

In operation the circuit input 40 is supplied with a dc voltage representative of the supply voltage amplitude, peak-to-peak or r.m.s., for instance 3.7V. This signal is passed to the low pass filter R1,C1,C2 which has a relatively long time constant. The output from the low-pass filter essentially tracks the long term trends in the supply voltage and provides a reference voltage for the comparators IC1,IC2, also 3.7V in this case.

The potential dividers are arranged such that under steady conditions, the voltage on the inverting input of IC1 will be slightly higher than the reference voltage ,e.g. 3.75V, and the voltage on the non-inverting input of IC2 slightly lower, e.g. 3.65V. Under these conditions the outputs of the comparators IC1,IC2 are low. If, however, there is a drop in supply voltage for a duration significantly below the time constant of the low-pass filter R1,C1,C2, the reference voltage will remain substantially constant due to the action of the filter R1,C1,C2, while the voltages at the mid-points of the potential dividers will fall. Should the voltage on the non-inverting input of the comparator IC1 fall below the reference voltage the output of the comparator will go high and consequently the voltage at the output 39 of the circuit will go high. Similarly, if there is a short increase in the supply voltage, the voltage on the inverting input of IC2 will rise. If it becomes greater than the reference voltage, the output of this comparator will go high and consequently the voltage at the output 39 of the circuit will go high. It can, therefore, be seen that the output 39 going high indicates unsteadiness in the supply voltage.

It is apparent that this circuit is capable of producing an ac voltage at one of three different levels; a low level for signalling, an intermediate level for economy lighting and a high level for igniting flourescent lamps. It is envisaged, however, that this circuit will find application in other systems where two or three ac voltage levels are required.

## Claims

1. A gas discharge lighting system comprising:
a gas discharge lamp (15,15′);
a power distribution conductor system for transmitting electrical power to the lamp; and
an electrical power supply for feeding electrical power to the conductor system at a predetermined nominal supply voltage below normal mains voltage and including a transformer (T2) for temporarily inducing a supplementary voltage when initially operating the lamp to effect igniting thereof, **characterised by**
signalling means (18, 38) employing said transformer (T2) to produce signalling voltage excursions on the conductor system; and
remote switching means (16, 16′) coupled to said power distribution conductor system,
wherein the switching means (16, 16′) is responsive to the signalling voltage excursions to control the supply of electrical power from the conductor system.

2. A system according to claim 1 wherein the nominal supply voltage is reduced temporarily by means of said transformer (T2) for signalling.

3. A system according to claim 1 or 2, wherein signalling is inhibited for a predetermined period after a supply voltage excursion.

4. A system according to any preceding claim including more than one lamp (15, 15′) and switching means (16, 16′), and wherein said signalling means (18,38) is operative to produce said signalling voltage excursion in the supply voltage for different predetermined times selectively so as to operate different ones of said switching means (16, 16′).

5. A system according to claim 1 wherein said nominal supply voltage is produced by a first transformer (T1) and the supplementary voltage is provided by a second transformer (T2) having a primary winding connected to receive the normal mains voltage and a secondary winding that produces the supplementary voltage.

6. A system as claimed in claim 5 wherein the secondary winding of the second transformer (T2) is connected so as to provide a series connection with the first transformer (T1).

7. A system according to claim 5 or 6 including timed control means (TM, TM1) for connecting the primary winding of the second transformer in an open circuit disconnected from the mains supply, for producing a temporary reduction in the nominal supply voltage so as to actuate the switching means (16, 16′).

8. A system according to claim 5 or 6 including timed control means (TM, TM1, 17, 24) for causing a voltage generated in the secondary winding of the second transformer (T2) to be anti-phase with respect to the voltage produced by the first transformer (T1) for producing a temporary reduction in the nominal supply voltage so as to actuate the switching means (16, 16′).

9. A system according to claim 7 or 8 wherein said time controlled means (TM, TM1, 17, 24) includes means for selectively controlling the time period during which the supply voltage is reduced.

10. A system according to any preceding claim wherein the switching means (16, 16′) includes voltage sensor means (C) responsive to said signalling voltage excursions and a relay (B) responsive to said voltage sensor (C) for switching the supply of electrical power from the conductor system.

11. A system according to claim 10 including a rechargeable power supply (23) for the relay (B), arranged to be charged from the supply conductors.

12. A system according to claim 10 or 11 including manually operable switches (S1, S2) for operating said relay (B).

13. A system according to any one of claims 1 to 4, wherein the voltage changing means comprises a first transformer (T1), a second transformer (T2) including a primary winding having first (W4) and second (W5) tappings and controlled solid state switch means (27, 28, 29, 30) for varying the current flowing in said primary winding of the second transformer (T2) relative to the current output from the first transformer (T1) so as to vary the output voltage or for selectively creating a low impedance path between the said tappings (W4, W5).

14. A system according to claim 13 wherein the solid state switch means (27, 28, 29, 30) are triacs (27, 28, 29, 30).

15. A system according to claim 13 or 14 wherein the first transformer (T1) is an auto transformer (T1).

16. A system according to claim 13, 14 or 15 wherein the secondary winding of the second transformer (T2) is connected so as to provide a series connection with the first transformer (T1).

17. A system according to any of claims 13 to 16 wherein the switch means (27, 28, 29, 30) are connected so as to form a bridge circuit (24).

## Patentansprüche

1. Gasentladungsbeleuchtungssystem, das folgendes umfasst:
eine Gasentladungslampe (15,15′);
ein Leistungsverteilungsleitersystem, um elektrische Leistung zur Lampe zu übertragen; und
eine elektrische Leistungsversorgung, um elektrische Leistung bei einer vorbestimmten Nominalversorgungsspannung unter normaler Netzspannung zum Leitersystem zu bringen, und die einen Transformator (T2) einschließt, um vorübergehend eine zusätzliche Spannung zu induzieren, wenn die Lampe anfänglich betrieben wird, um ihre Zündung zu bewirken, **gekennzeichnet durch**
ein Signalmittel (18, 38), das den Transformator (T2) benutzt, um Signalspannungsabweichungen auf dem Leitersystem herzustellen; und
ein entferntes Schaltmittel (16, 16′), das an das Leistungsverteilungsleitersystem angeschlossen ist,
worin das Schaltmittel (16, 16′) auf die Signalspannungsabweichungen reagiert, um die Versorgung elektrischer Leistung von dem Leitersystem zu regeln.

2. System nach Anspruch 1, in dem die Nominalversorgungsspannung vorübergehend durch den Transformator (T2) zur Signalgebung verringert wird.

3. System nach Anspruch 1 oder 2, in dem die Signalgebung nach einer Versorgungsspannungsabweichung für eine vorbestimmte Zeitdauer gesperrt wird.

4. System nach einem der vorhergehenden Ansprüche, das mehr als eine Lampe (15, 15′) und ein Schaltmittel (16, 16′) einschließt, und in dem das Signalmittel (18,38) betrieben wird, um die Signalspannungsabweichung in der Versorgungsspannung für verschiedene vorbestimmte Zeiten selektiv herzustellen, um verschiedene Schaltmittel (16, 16′) zu betreiben.

5. System nach Anspruch 1, in dem die Nominalversorgungsspannung von einem ersten Transformator (T1) hergestellt wird, und die zusätzliche Spannung von einem zweiten Transformator (T2) geliefert wird, der eine Primärwicklung hat, die so angeschlossen ist, um die normale Netzspannung zu empfangen, und eine Sekundärwicklung, die die zusätzliche Spannung herstellt.

6. System nach Anspruch 5, in dem die Sekundärwicklung des zweiten Transformators (T2) so angeschlossen ist, daß sie eine Reihenverbindung mit dem ersten Transformator (T1) liefert.

7. System nach Anspruch 5 oder 6, das ein zeitlich festgesetztes Regelmittel (TM, TM1) einschließt, um die primärwicklung des zweiten Transformators in eine offene Schaltung anzuschließen, die von der Netzversorgung getrennt ist, um eine vorübergehende Verringerung der Nominalversorgungsspannung herzustellen, um das Schaltmittel (16, 16′) zu betätigen.

8. System nach Anspruch 5 oder 6, das ein zeitlich festgesetztes Regelmittel (TM, TM1, 17, 24) einschließt, um zu verursachen, daß eine in der Sekundärwicklung des zweiten Transformators (T2) erzeugte Spannung mit Bezug auf die Spannung, die von dem ersten Transformator (T1) hergestellt wird, gegenphasig ist, um eine vorübergehende Verringerung der Nominalversorgungsspannung herzustellen, um das Schaltmittel (16, 16′) zu betätigen.

9. System nach Anspruch 7 oder 8, in dem das zeitlich festgesetzte Mittel (TM, TM1, 17, 24) ein Mittel einschließt, um die Zeitdauer, während der die Versorgungsspannung verringert wird, selektiv zu regeln.

10. System nach einem der vorhergehenden Ansprüche, in dem das Schaltmittel (16, 16′) ein Spannungsabtastmittel (C) einschließt, das auf die Signalspannungsabweichungen reagiert, und ein Relais (B), das auf das Spannungsabtastmittel (C) reagiert, um die Versorgung elektrischer Leistung von dem Leitersystem zu schalten.

11. System nach Anspruch 10, das eine wideraufladbare Leistungsversorgung (23) für das Relais (B) hat, die von den Versorgungsleitern aufgeladen werden kann.

12. System nach Anspruch 10 oder 11, das manuell betriebene Schalter (S1, S2) einschließt, um das Relais (B) zu betreiben.

13. System nach einem der Ansprüche 1 bis 4, in dem das Spannungsänderungsmittel einen ersten Transformator (T1) umfasst, einen zweiten Transformator (T2), der eine Primärwicklung mit ersten (W4) und zweiten (W5) Abgriffen einschließt, und geregelte Halbleiterschaltermittel (27, 28, 29, 30), um den Strom zu ändern, der in der Primärwicklung des zweiten Transformators (T2) relativ zur Stromausgabe von dem ersten Transformator (T1) fließt, um die Ausgangsspannung zu ändern, oder um selektiv einen niedrigen Impedanzweg zwischen den Abgriffen (W4, W5) zu schaffen.

14. System nach Anspruch 13, in dem die Festzustandsschaltmittel (27, 28, 29, 30) Zweirichtungsthyristoren sind.

15. System nach Anspruch 13 oder 14, in dem der erste Transformator (T1) ein Autotransformator (T1) ist.

16. System nach Anspruch 13, 14 oder 15, in dem die Sekundärwicklung des zweiten Transformators (T2) so angeschlossen ist, um eine Reihenverbindung mit dem ersten Transformator (T1) zu liefern.

17. System nach einem der Ansprüche 13 bis 16, in dem die Schaltmittel so angeschlossen sind, um eine Brückenschaltung (24) zu bilden.

## Revendications

1. Système d'éclairage à décharge luminescente de gaz comportant:
une lampe à décharge de gaz (15, 15′);
un système conducteur distributeur d'énergie pour transmettre l'énergie électrique à la lampe; et
une source d'énergie électrique pour apporter l'énergie électrique au système conducteur à une tension nominale prédéterminée inférieure à la tension de secteur et comportant un transformateur (T2) permettant l'induction d'une tension supplémentaire lors du fonctionnement initial de la lampe pour en assurer l'allumage, caractérisé par
des moyens de signalisation (18, 38) exploitant ledit transformateur (T2) pour produire des excursions de tension de signalisation dans le système conducteur; et
des moyens de télécommutation (16, 16′) accouplés audit système conducteur de distribution d'énergie,
dont les moyens de télécommutation (16, 16′) répondent aux excursions de tension de signalisation pour commander l'amenée d'énergie électrique provenant du système conducteur.

2. Système selon la revendication 1 dont la tension nominale d'amenée est provisoirement diminuée au moyen dudit transformateur (T2) pour la signalisation.

3. Système selon la revendication 1 ou 2, dont la signalisation est inhibée pendant un délai prédéterminé suite à une excursion d'amenée de tension.

4. Système selon l'une quelconque des revendications précédentes comportant plusieurs lampes (15, 15′) et des moyens de télécommutation (16, 16′) et dont les moyens de signalisation (18, 38) sont opérationnels pour l'exécution sélective d'une excursion de signalisation de tension en tension d'amenée pendant différents délais prédéterminés de manière à assurer le fonctionnement d'unités diverses des moyens de télécommutation (16, 16′).

5. Système selon la revendication 1, dont la tension nominale d'amenée est transmise par un transformateur (T1) et la tension supplémentaire est assurée par un deuxième transformateur (T2) dont l'enroulement primaire est raccordé de façon à recevoir la tension normale du secteur et un enroulement secondaire apportant la tension supplémentaire.

6. Système selon la revendication 5, dont l'enroulement secondaire du deuxième transformateur (T2) est raccordé de façon telle à assurer un accord en série avec le premier transformateur (T1).

7. Système selon la revendication 5 ou 6 y compris une minuterie de commande (TM, TM1) pour raccorder l'enroulement primaire du deuxième transformateur en circuit ouvert débranché du secteur, assurant une diminution provisoire de la tension nominale d'amenée de telle façon à faire fonctionner les moyens de télécommutation (16, 16′).

8. Système selon la revendication 5 ou 6 y compris une minuterie de commande (TM, TM1, 17, 24) pour provoquer la mise en anti-phase de la tension provenant de l'enroulement secondaire du deuxième transformateur (T2) par rapport à la tension produite par le premier transformateur (T1) pour produire une diminution provisoire de tension nominale d'amenée de telle façon à faire fonctionner les moyens de télécommutation (16, 16′).

9. Système selon la revendication 7 ou 8 dont les moyens de minuterie (TM, TM1, 17, 24) prévoient des moyens de régulation sélective du délai lors duquel la tension d'amenée est diminuée.

10. Système selon toute revendication précédente dont les moyens de télécommutation (16, 16′) prévoient un moyen capteur de tension (C) répondant auxdites excursions de tension de signalisation et un relais (B) répondant audit capteur de tension (C) pour la commutation de l'amenée d'énergie électrique à partir du système conducteur.

11. Système selon la revendication 10 y compris une amenée de courant rechargeable (23) pour le relais (B), disposée pour la recharge à partir des conducteurs d'amenée.

12. Système selon la revendication 10 ou 11 y compris les interrupteurs manuels (S1, S2) pour assurer le fonctionnement dudit relais (B).

13. Système selon l'une quelconque des revendications 1 à 4, dont les moyens de modification de tension comportent un premier transformateur (T1), un deuxième transformateur (T2) comportant un enroulement primaire ayant un premier (W4) et un deuxième (W5) point de prise et des moyens rupteurs à l'état solide (27, 28, 29, 30) pour varier le courant apporté audit premier enroulement du deuxième transformateur (T2) par rapport à la sortie de courant du premier transformateur (T1) de telle façon à varier la tension de sortie ou pour la création sélective d'un chemin de faible impédance entre lesdits points de prise (W4, W5).

14. Système selon la revendication 13 dont les moyens rupteurs à l'état solide (27, 28, 29, 30) sont des triacs (27, 28, 29, 30).

15. Système selon la revendication 13 ou 14 dont le premier transformateur (T1) est un transformateur automatique (T1).

16. Système selon la revendication 13, 14 ou 15 dont l'enroulement secondaire du deuxième transformateur (T2) est raccordé de façon à assurer le raccord en série avec le premier transformateur (T1).

17. Système selon l'une ou l'autre des revendications 13 à 16 dont les moyens rupteurs (27, 28, 29, 30) sont raccordés de façon à former un circuit de pont (24).
